# EUROPEAN PATENT SPECIFICATION

(11) **EP 2 557 011 B1**
(45) Date of publication and mention of the grant of the patent: **05.06.2019**
(21) Application number: 10848445.2
(22) Date of filing: 22.06.2010
(51) Int. Cl.: B60W 30/02, B60W 10/18, B60W 20/00, B60W 30/00

(54) **INDUSTRIAL VEHICLE**
INDUSTRIEFAHRZEUG
VÉHICULE INDUSTRIEL

(30) Priority: 25.03.2010 JP 2010070842
(43) Date of publication of application: 13.02.2013
(73) Proprietor: Mitsubishi Nichiyu Forklift Co., Ltd., Nagaokakyo-shi Kyoto 617-8585 (JP)
(72) Inventor: FUTAHASHI, Kensuke, Minato-ku Tokyo 108-8215 (JP); KINOUCHI, Yusuke, Minato-ku Tokyo 108-8215 (JP); UMEHARA, Ryuichi, Minato-ku Tokyo 108-8215 (JP); NAKADA, Takuya, Minato-ku Tokyo 108-8215 (JP); SHIBUTANI, Takashi, Minato-ku Tokyo 108-8215 (JP); HIGUCHI, Masaru, Minato-ku Tokyo 108-8215 (JP)
(74) Representative: Henkel, Breuer & Partner
(86) International application number: PCT/JP2010/060562
(87) International publication number: WO 2011/118053

(56) References cited:
- EP-A2- 1 637 388
- WO-A1-96/34154
- JP-A- 3 284 461
- JP-A- 62 012 305
- JP-A- 2004 129 459
- JP-A- 2005 168 152
- JP-A- 2006 060 936
- JP-A- 2006 224 687
- JP-A- 2007 238 301
- JP-A- 2009 113 772
- JP-A- 2010 081 684

## Description

### Field

The present invention relates to an industrial vehicle, and more particularly to an industrial vehicle capable of suppressing pitching vibration of a vehicle.

### Background

WO 96/34154 A1 discloses a pitching damping device for a construction machine that can provide a vibration damping action by suppressing pitching. More specifically, a gyrostabilizer mounted on an upper swinging body comprises a rotary body having a great inertia moment and adapted to rotate at a high speed around a gyro axis by means of a driving motor, and a support member for supporting the rotary body about a precession axis intersecting perpendicularly to the gyro shaft, wherein one of the gyro axis and the precession axis is disposed in parallel to a swing axis, while the other is disposed perpendicularly to a pitching axis of the upper swinging body.

In an industrial vehicle, there is a problem of pitching vibration occurring in a vehicle body when a vehicle runs under a load (when it runs with a cargo carried thereon). The pitching vibration is an undesirable phenomenon in which the vehicle body vibrates longitudinally about its axle as a rotation axis, which can cause vibration of a cargo carried on the vehicle or deterioration in driver's riding comfort. A technique described in Patent Literature 1 is known as a conventional industrial vehicle related to this problem.

### Citation List

### Patent Literature

Patent Literature 1: Japanese Patent No. 3935039

### Summary

### Technical Problem

The present invention provides an industrial vehicle capable of suppressing pitching vibration of a vehicle.

### Solution to Problem

The problem is solved by an industrial vehicle according to claim 1.

### Advantageous Effects of Invention

In the industrial vehicle according to the present invention, feedback control is performed based on a value detected by a vibration detector so as to apply a pitching control torque to a vehicle body as a driving force or a braking force of an actuator. This feature is advantageous in suppressing pitching vibration of a vehicle.

### Brief Description of Drawings

FIG. 1 is a configuration diagram of an industrial vehicle according to an embodiment of the present invention.
FIG. 2 is a configuration diagram of a pitching control unit of the industrial vehicle shown in FIG. 1.
FIG. 3 is a flowchart of a function of the industrial vehicle shown in FIG. 1.
FIG. 4 is an explanatory diagram of the function of the industrial vehicle shown in FIG. 1
FIG. 5 is an explanatory diagram of the function of the industrial vehicle shown in FIG. 1.
FIG. 6 is a configuration diagram of a modification of the industrial vehicle shown in FIG. 1.
FIG. 7 is an explanatory diagram of the modification of the industrial vehicle shown in FIG. 1.
FIG. 8 is a configuration diagram of another modification of the industrial vehicle shown in FIG. 1.
FIG. 9 is an explanatory diagram of the another modification of the industrial vehicle shown in FIG. 1.
FIG. 10 is a configuration diagram of still another modification of the industrial vehicle shown in FIG. 1.
FIG. 11 is an explanatory diagram of the still another modification of the industrial vehicle shown in FIG. 1.
FIG. 12 is a configuration diagram of still another modification of the industrial vehicle shown in FIG. 1.
FIG. 13 is a configuration diagram of still another modification of the industrial vehicle shown in FIG. 1.
FIG. 14 is a flowchart of an actuator selecting step.
FIG. 15 is a table of actuator selection patterns.
FIG. 16 is a table of a relation between a vehicle configuration and selectable actuators.
FIG. 17 is an explanatory diagram of an application example of the industrial vehicle shown in FIG. 1. Description of Embodiments

The present invention is explained below in detail with reference to the accompanying drawings. The present invention is not limited to the following embodiment. In addition, constituent elements in the embodiment include elements that can be easily replaced or obviously replaceable while maintaining the unity of invention. A plurality of modifications described in the following embodiment can be arbitrarily combined within a scope obvious to persons skilled in the art.

### [Industrial vehicle]

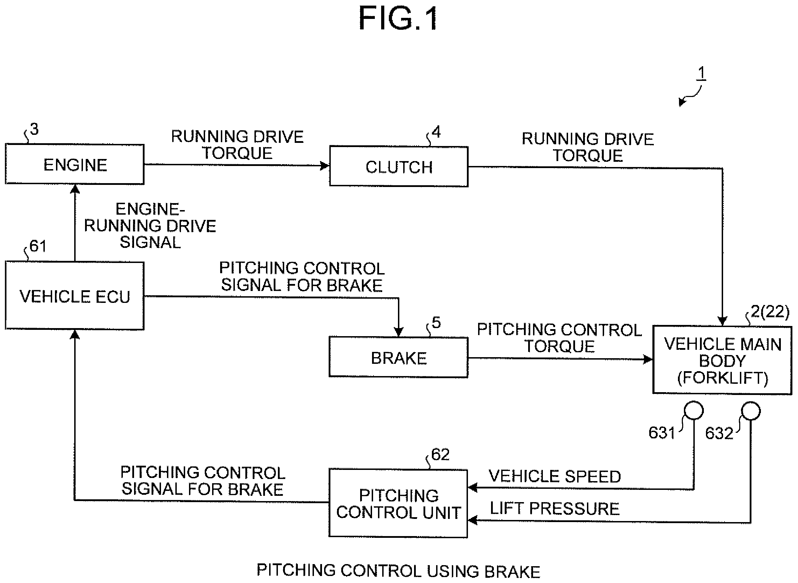

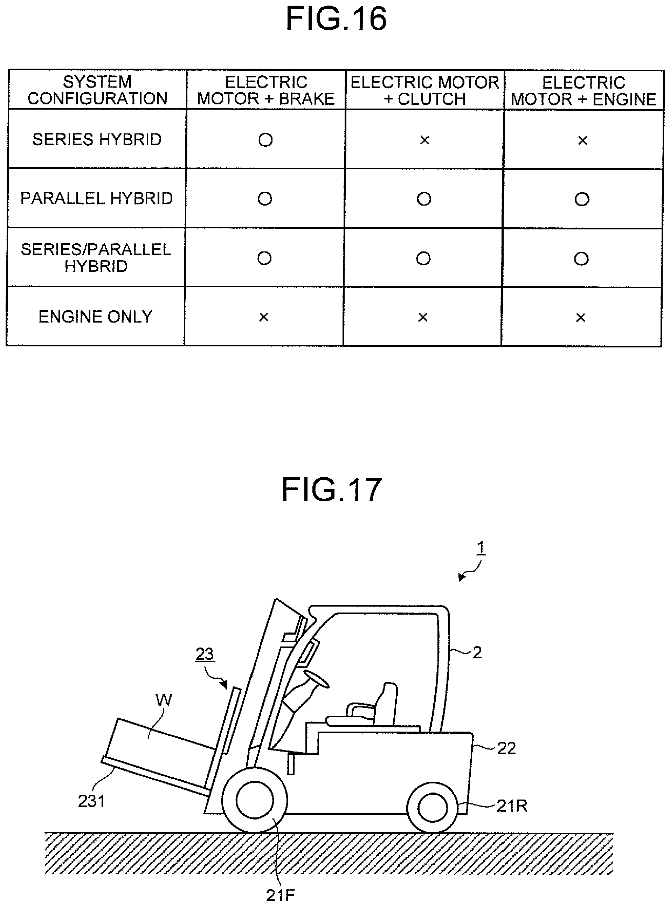

FIG. 1 is a configuration diagram of an industrial vehicle according to an embodiment of the present invention. FIG. 17 is an explanatory diagram of an application example of the industrial vehicle shown in FIG. 1. This industrial vehicle is applied to an industrial vehicle including an engine as a power source and a cargo-handling device that carries a cargo (for example, a forklift or a truck). In the present embodiment, the industrial vehicle applied to a forklift is described as an example.

An industrial vehicle 1 includes a vehicle main body 2, an engine 3, a clutch 4, a brake 5, and vehicle control devices 61 and 62 (see FIG. 1).

The vehicle main body 2 is a four-wheeled automobile with front driving wheels 21F and rear driven wheels 21R, and has a cargo-handling device 23 in front of a vehicle body 22 (see FIG. 17). The cargo-handling device 23 is designed to lift and lower a cargo W, and has a lift mechanism 231 that carries the cargo W to lift and lower it and a driving motor (not shown) that drives the lift mechanism 231, for example.

The engine 3, the clutch 4, and the brake 5 are mechanical elements that apply a driving force or a braking force to the vehicle body 22 (see FIG. 1). The engine 3, the clutch 4, and the brake 5 are widely employed in the existing industrial vehicles. For example, in the present embodiment, the engine 3 is a direct-injection diesel engine and connected to an axle (not shown) of the driving wheels 21F via the fluid clutch 4 and a transmission (not shown). This constitutes a driving device of the vehicle with the engine 3 used as a power source. In addition, the brake 5 is a hydraulic disc brake and provided on the front and rear wheels 21F and 21R of the vehicle. This brake 5 constitutes a braking device of the vehicle.

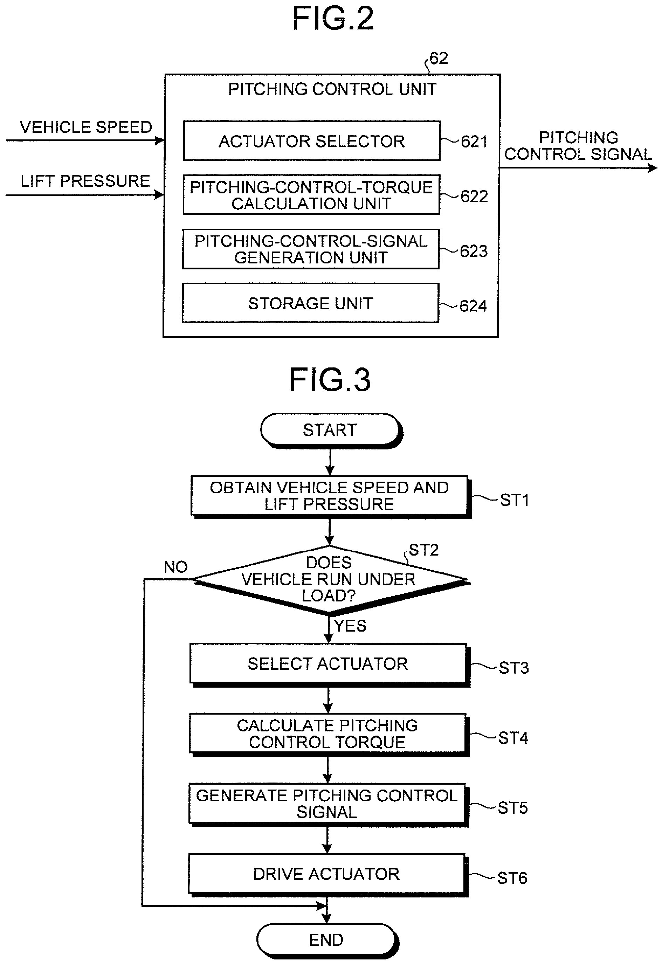

The vehicle control devices 61 and 62 include a vehicle electronic control unit (ECU) 61, a pitching control unit 62, and sensors 631 and 632 (see FIG. 1). The vehicle ECU 61 is a control unit that primarily controls driving of the engine 3, the clutch 4, and the brake 5, and is installed in the existing industrial vehicles. The pitching control unit 62 is a unit that performs pitching control mentioned below, and is provided, for example, independently from the vehicle ECU 61. The pitching control unit 62 has an actuator selector 621 that selects an actuator, a pitching-control-torque calculation unit 622 that calculates a pitching control torque, a pitching-control-signal generation unit 623 that generates a pitching control signal, and a storage unit 624 that stores necessary information for pitching control (see FIG. 2). The sensors 631 and 632 include a vehicle speed sensor 631 that measures a speed of the vehicle and a lift pressure sensor 632 that measures a lift pressure (acceleration) of the lift mechanism 231, for example. The vehicle speed sensor 631 and the lift pressure sensor 632 are installed in the existing industrial vehicles.

The industrial vehicle 1 can use the cargo-handling device 23 to lift and lower the cargo W and run or move with the cargo W carried on the vehicle 1. The vehicle ECU 61 outputs an engine-running drive signal to the engine 3, thereby controlling driving of the engine 3 to control a running drive torque to be applied to the vehicle body 22. The vehicle ECU 61 also performs ON/OFF control of the clutch 4, thereby controlling transmission of the running drive torque from the engine 3 to the vehicle body 22. Accordingly, driving force control of the vehicle is performed. In addition, the vehicle ECU 61 controls a hydraulic pressure of the brake 5, thereby performing braking force control of the vehicle.

### [Pitching control of vehicle]

A problem that the industrial vehicle has is pitching vibration occurring in the vehicle body when the vehicle runs under a load (when it runs with the cargo W carried thereon). The pitching vibration is an undesirable phenomenon in which the vehicle body vibrates longitudinally about its axle as a rotation axis, which can cause vibration of the cargo W carried on the vehicle or deterioration in driver's riding comfort.

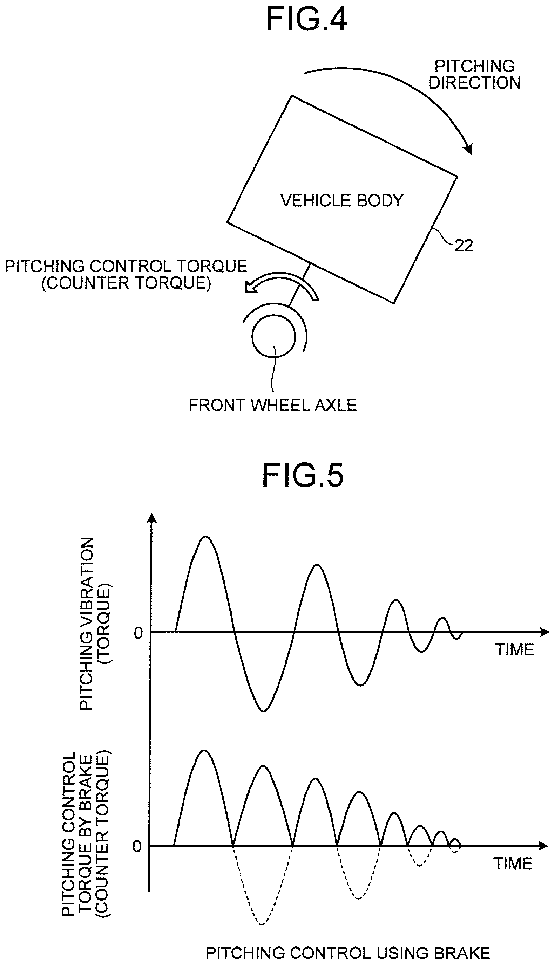

Therefore, the industrial vehicle 1 performs pitching control to suppress pitching vibration that occurs when running under a load (see FIGS. 3 and 4). In the pitching control, when pitching vibration occurs, an actuator (for example, the engine 3, the clutch 4, and the brake 5) is used to generate a pitching control torque (a counter torque) on the vehicle body 22, thereby suppressing the pitching vibration (see FIG. 4). The pitching control is explained below (see FIG. 3).

At Step ST1, a vehicle speed and a lift pressure are obtained. For example, in the present embodiment, the pitching control unit 62 continually obtains values detected by the vehicle speed sensor 631 and the lift pressure sensor 632. After Step ST1, the control proceeds to Step ST2.

At Step ST2, whether the vehicle is running under a load is determined. That is, whether a pitching-control start condition is satisfied is determined. For example, in the present embodiment, the pitching control unit 62 determines whether the vehicle is running under a load based on an output value from the lift pressure sensor 632. When a positive determination is obtained at Step ST2, the control proceeds to Step ST3, and when a negative determination is obtained, the control is finished.

In addition to Step ST2 described above, whether an additional pitching-control start condition is satisfied can also be determined. For example, it is possible to determine the pitching control to be necessary when amplitude of the values detected by the lift pressure sensor 632 is equal to or larger than a predetermined threshold and then perform the pitching control.

At Step ST3, selection of an actuator is performed. The actuator is for generating a pitching control torque (a counter torque) on the vehicle body 22. For example, in the industrial vehicle 1 in FIG. 1, the engine 3, the clutch 4, and the brake 5 can generate a pitching control torque on the vehicle body 22 (see FIG. 1). Thus, any one of the engine 3, the clutch 4, and the brake 5 can be selected as the actuator. The selection of the actuator is performed based on, for example, magnitude of a required pitching control torque (a required counter torque) or a pitching vibration frequency. After Step ST3, the control proceeds to Step ST4.

When a certain actuator is initially specified or there is no option for actuators, Step ST3 is omitted. For example, in the industrial vehicle 1 shown in FIG. 1, the brake 5 is set as a prescribed actuator, and accordingly Step ST3 is omitted.

At Step ST4, a pitching control torque is calculated. The pitching control torque is a torque (a counter torque) to be applied to the vehicle body 22 to damp the pitching vibration of the vehicle body 22. The pitching control unit 62 (the pitching-control-torque calculation unit 622) calculates the pitching control torque based on detection values of the vehicle speed sensor 631 and the lift pressure sensor 632. For example, in the present embodiment, a torque of the pitching vibration (a pitching direction and a pitching vibration state of the vehicle 22) is calculated based on the detection values of the vehicle speed sensor 631 and the lift pressure sensor 632 to calculate a pitching control torque based on the calculated torque of the pitching vibration (see FIG. 5). The pitching control torque is calculated also according to output characteristics of the actuator selected at Step ST3. For example, in the present embodiment, the brake 5 is specified as the actuator, and thus the pitching control torque is calculated according to output characteristics of the brake 5. That is, when the vehicle runs under a load, a braking torque is applied to the wheels 21F and 21R (particularly to the front wheels 21F having an axle about which the pitching vibration occurs) upon an ON operation of the brake 5. Thus, the braking torque is used as a pitching control torque. The pitching control torque is calculated according to the braking torque characteristics (output characteristics of the brake 5). Specifically, an absolute value of a torque of the pitching vibration is calculated as a pitching control torque (a braking torque of the brake 5). A control period of the pitching control is appropriately set according to the configuration of the vehicle body 22. After Step ST4, the control proceeds to Step ST5.

At Step ST5, a pitching control signal is generated. The pitching control signal is a control signal that causes the actuator to output the pitching control torque calculated at Step ST4 (a control signal for driving the actuator), and is generated by the pitching control unit 62 (the pitching-control-signal generation unit 623). After Step ST5, the control proceeds to Step ST6.

At Step ST6, the actuator is driven based on the pitching control signal (Step ST5). The actuator then outputs the pitching control torque (Step ST4) as a braking force or a driving force (see FIG. 5). This enables a counter torque against the pitching vibration of the vehicle to be applied to the vehicle body 22 to suppress the pitching vibration (see FIG. 4).

For example, in the present embodiment, the brake 5 is specified as the actuator, and the pitching control unit 62 outputs a pitching control signal for the brake 5 to the vehicle ECU 61 (see FIG. 1). The vehicle ECU 61 then outputs the pitching control signal for the brake 5 to the brake 5, thereby controlling driving of the brake 5 to generate a braking force corresponding to the pitching control torque. This enables the pitching control torque to be applied to the vehicle body 22 to suppress the pitching vibration of the vehicle body 22.

In addition, in the present embodiment, because the cargo-handling device 23 (the lift mechanism 231) is located in front of the vehicle body 22, the pitching vibration occurs about the axle of the front wheels 21F of the vehicle (see FIGS. 4 and 17). Thus, the brake 5 applies the braking force corresponding to the pitching control torque to the front wheels 21F of the vehicle, thereby effectively suppress the pitching vibration of the vehicle body 22.

### [Pitching control using clutch]

In the present embodiment, the brake 5 is used as a prescribed actuator that generates a pitching control torque. However, the present invention is not limited to this, and the clutch 4 or the engine 3 can be alternatively used as a prescribed actuator.

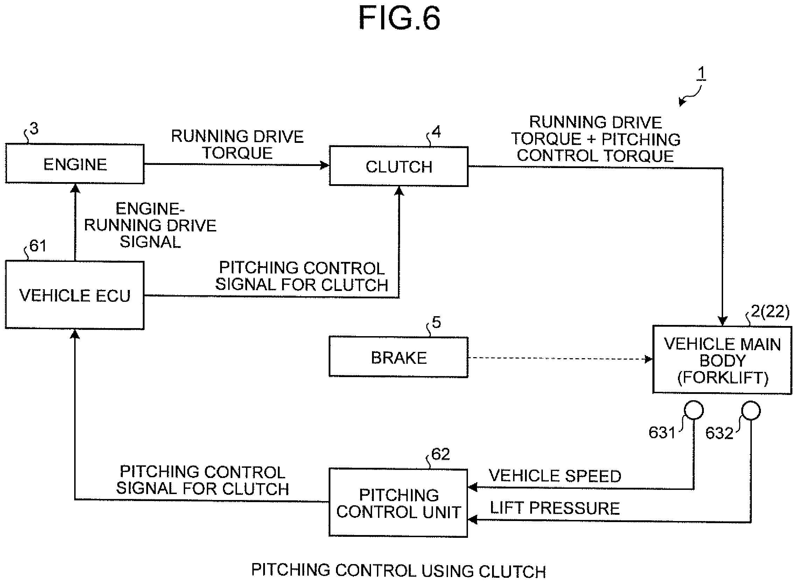

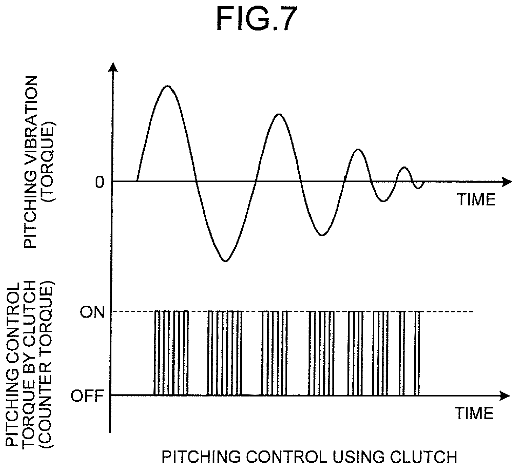

FIGS. 6 and 7 are a configuration diagram (FIG. 6) and an explanatory diagram (FIG. 7) of a modification of the industrial vehicle shown in FIG. 1. In FIGS. 6 and 7, constituent elements identical to those shown in FIG. 1 are denoted by like reference signs and explanations thereof will be omitted.

The industrial vehicle 1 uses the clutch 4 as a prescribed actuator that generates a pitching control torque (see FIG. 6). A torque generated on the vehicle body 22 upon an ON/OFF operation of the clutch 4 is used as a pitching control torque (see FIG. 7). Specifically, at Step ST4 of calculating a pitching control torque (see FIG. 3), a torque of the pitching vibration is calculated based on the detection values of the vehicle speed sensor 631 and the lift pressure sensor 632 to calculate a pitching control torque based on the calculated torque of the pitching vibration. At this time, the clutch 4 is specified as the actuator, and thus the pitching control torque is calculated according to output characteristics of the clutch 4. That is, when the vehicle runs by inertia or runs with an electric motor (not shown) used as a power source, a braking torque generated by an engine brake is applied to the driving wheels (particularly to the front wheels 21F having an axle about which the pitching vibration occurs) upon an OFF operation of the clutch 4. Thus, the braking torque is used as a pitching control torque, and the pitching control torque is calculated according to the braking torque characteristics (output characteristics of the clutch 4).

Based on the calculated pitching control torque, the pitching control unit 62 generates a pitching control signal for the clutch 4 (Step ST5), and the vehicle ECU 61 uses the pitching control signal to control driving of the clutch 4 (Step ST6) (see FIGS. 3 and 6). Upon an ON/OFF operation of the clutch 4, the pitching control torque is applied to the vehicle body 22 to suppress the pitching vibration of the vehicle body 22 (see FIG. 4).

### [Pitching control using engine]

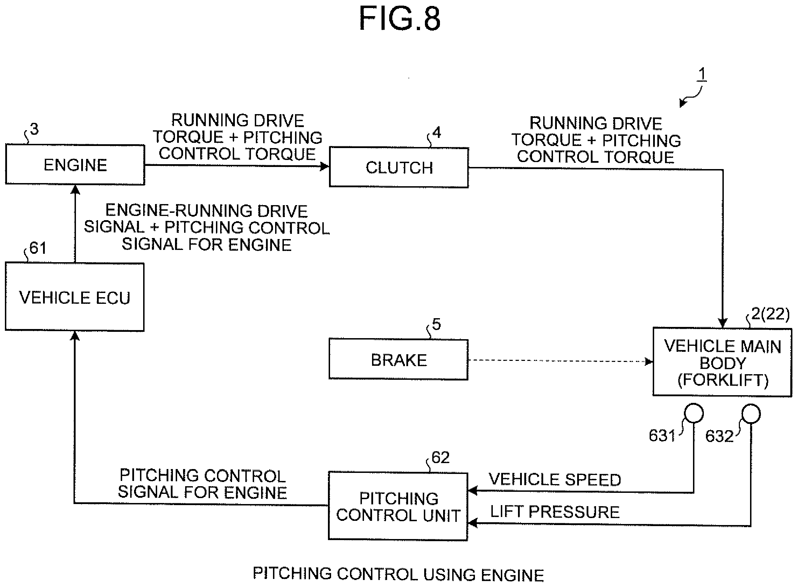

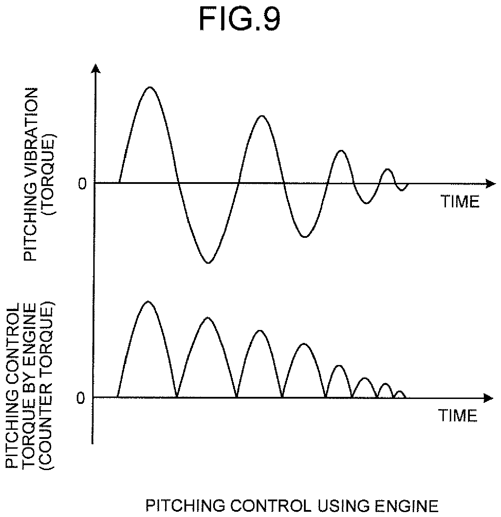

FIGS. 8 and 9 are a configuration diagram (FIG. 8) and an explanatory diagram (FIG. 9) of another modification of the industrial vehicle shown in FIG. 1. In FIGS. 8 and 9, constituent elements identical to those shown in FIG. 1 are denoted by like reference signs and explanations thereof will be omitted.

The industrial vehicle 1 uses the engine 3 as a prescribed actuator that generates a pitching control torque (see FIG. 8). A torque generated on the vehicle body 22 by controlling a driving force of the engine 3 is used as a pitching control torque (see FIG. 9). Specifically, at Step ST4 of calculating a pitching control torque (see FIG. 3), a torque of the pitching vibration is calculated based on the detection values of the vehicle speed sensor 631 and the lift pressure sensor 632 to calculate a pitching control torque based on the calculated torque of the pitching vibration. At this time, the engine 3 is specified as the actuator, and thus the pitching control torque is calculated according to output characteristics of the engine 3. That is, when the vehicle runs with the engine, a driving force (a running drive torque) of the engine 3 is transmitted to the driving wheels 21F to cause the vehicle to run. At this time, the running drive torque from the engine 3 and the pitching control torque are added together and output, thereby applying the pitching control torque to the driving wheels (particularly to the front wheels 21F having an axle about which the pitching vibration occurs). Thus, the pitching control torque is calculated according to the driving force characteristics (output characteristics) of the engine 3.

Based on the calculated pitching control torque, the pitching control unit 62 generates a pitching control signal for the engine 3 (Step ST5), and the vehicle ECU 61 uses the pitching control signal to control driving of the engine 3 (Step ST6) (see FIGS. 3 and 8). Specifically, the vehicle ECU 61 outputs to the engine 3 a control signal obtained by adding the engine-running drive signal and the pitching control signal for the engine together. Based on the control signal, driving control of the engine 3 (for example, fuel control) is performed. The driving force of the engine 3 (a sum of the running drive torque and the pitching control torque) is transmitted to the driving wheels 21F, thereby applying the pitching control torque to the vehicle body 22. This results in suppression in pitching vibration of the vehicle body 22 (see FIG. 4).

### [Pitching control of hybrid vehicle]

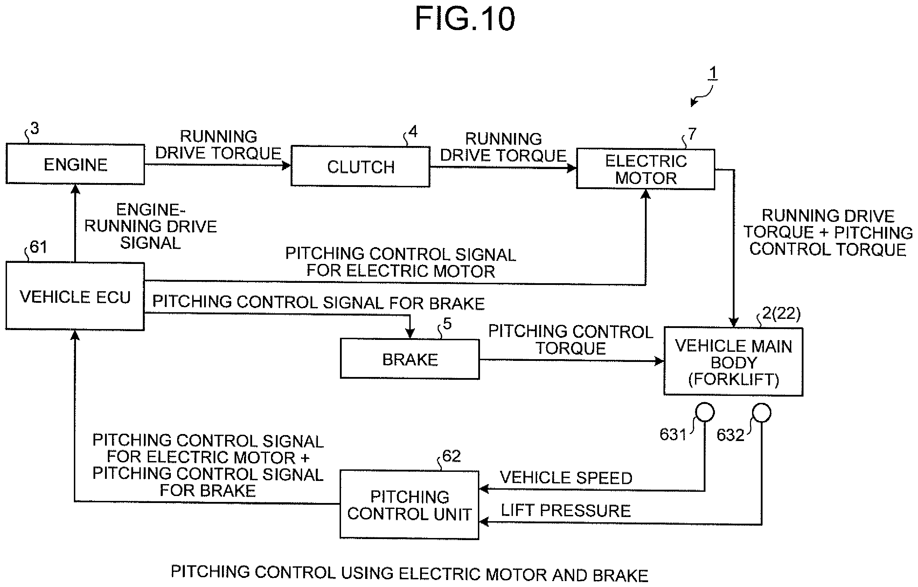

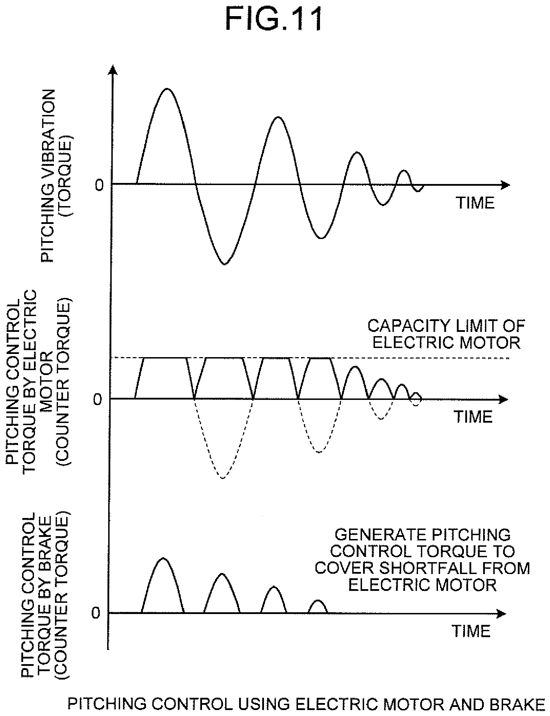

FIGS. 10 and 11 are a configuration diagram (FIG. 10) and an explanatory diagram (FIG. 11) of still another modification of the industrial vehicle shown in FIG. 1. In FIGS. 10 and 11, constituent elements identical to those shown in FIG. 1 are denoted by like reference signs and explanations thereof will be omitted.

The industrial vehicle 1 is a hybrid vehicle including the engine 3 and an electric motor 7 (see FIG. 10). There are some types of hybrid systems for such a hybrid vehicle, including series, parallel, and series-parallel types. In the present embodiment, the industrial vehicle 1 that employs a series-parallel hybrid system is explained as an example. The industrial vehicle 1 can select a running mode from a mode (1) in which a driving force (a running drive torque) of the engine 3 is transmitted to the driving wheels 21F, a mode (2) in which with the engine 3 stopped, a driving force of the electric motor 7 is transmitted to the driving wheels 21F, and a mode (3) in which power of the engine 3 is used to generate electricity to drive the electric motor 7 so that a driving force of the electric motor 7 is transmitted to the driving wheels 21F. In addition, when running by inertia, the industrial vehicle 1 can also run in a regenerative mode (4) in which the electric motor 7 is used as a power generator. The vehicle ECU 61 controls driving of the engine 3 and the electric motor 7.

FIG. 10 depicts a state in which the vehicle runs with the engine in the mode (1). During such engine running, the vehicle ECU 61 outputs an engine-running drive signal to the engine 3 so that the engine 3 is driven to generate a running drive torque. The running drive torque is then transmitted to the driving wheels 21F of the vehicle main body 2 via the clutch 4 to cause the vehicle to run.

The industrial vehicle 1 with the hybrid system can select the engine 3, the clutch 4, or the brake 5 (or the electric motor 7) as an actuator that generates a pitching control torque. Pitching control using such an actuator is performed in the same manner as shown in FIGS. 1 to 9.

The industrial vehicle 1 can also use the electric motor 7 in combination with (in cooperation with) any one of the engine 3, the clutch 4, and the brake 5 as an actuator to perform pitching control. For example, in the present embodiment, the electric motor 7 and the brake 5 are used as actuators (see FIG. 10). A driving force of the electric motor 7 and a braking torque of the brake 5 are applied as pitching control torques to the vehicle body 22, thereby performing pitching control (see FIG. 11). Specifically, at Step ST4 of calculating a pitching control torque (see FIG. 3), a torque of the pitching vibration is calculated based on the detection values of the vehicle speed sensor 631 and the lift pressure sensor 632 to calculate pitching control torques to be applied respectively by the electric motor 7 and by the brake 5 based on the calculated torque of the pitching vibration. At that time, output characteristics of the electric motor 7 and the brake 5 are considered. For example, in a configuration shown in FIG. 11, the electric motor 7 with quicker responsiveness is given priority in torque distribution and the brake 5 covers part of a necessary pitching-control torque amount, which is beyond the limit of capacity of the electric motor 7.

Based on the calculated pitching control torques, the pitching control unit 62 generates pitching control signals for the electric motor 7 and for the brake 5 (Step ST5), and the vehicle ECU 61 uses these pitching control signals to control driving of the electric motor 7 and the brake 5 (Step ST6) (see FIGS. 3 and 10). This enables the necessary pitching control torque to be applied to the vehicle body 22 to suppress the pitching vibration of the vehicle body 22 (see FIG. 4).

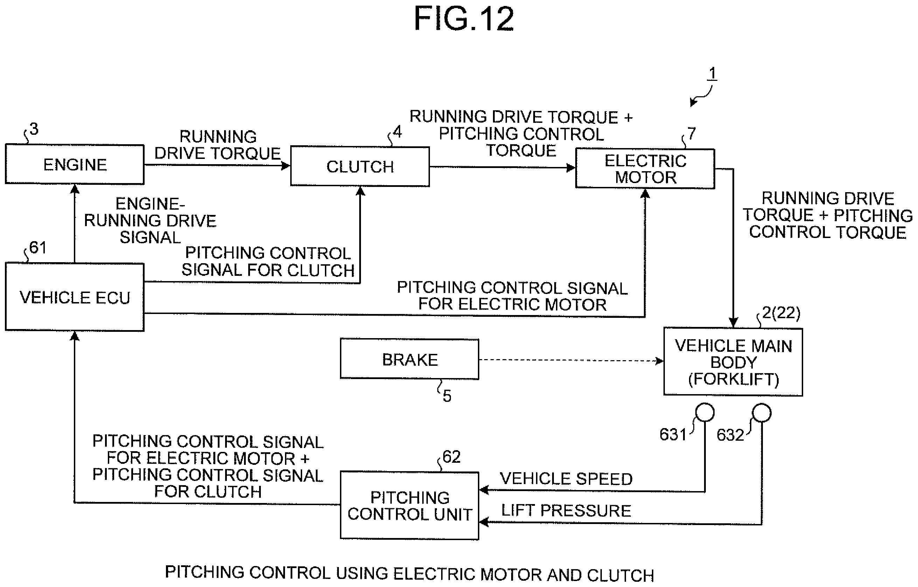

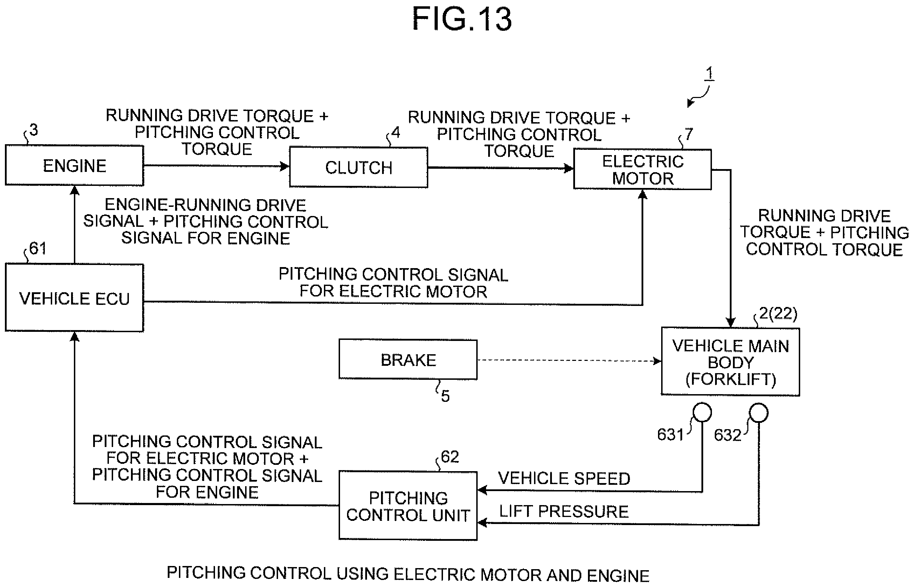

In the present embodiment, the electric motor 7 and the brake 5 are used in combination as actuators (see FIG. 10). However, the present invention is not limited to this, and the electric motor 7 and the clutch 4 (see FIG. 12) or the electric motor 7 and the engine 3 (see FIG. 13) can be used in combination.

### [Actuator selection pattern]

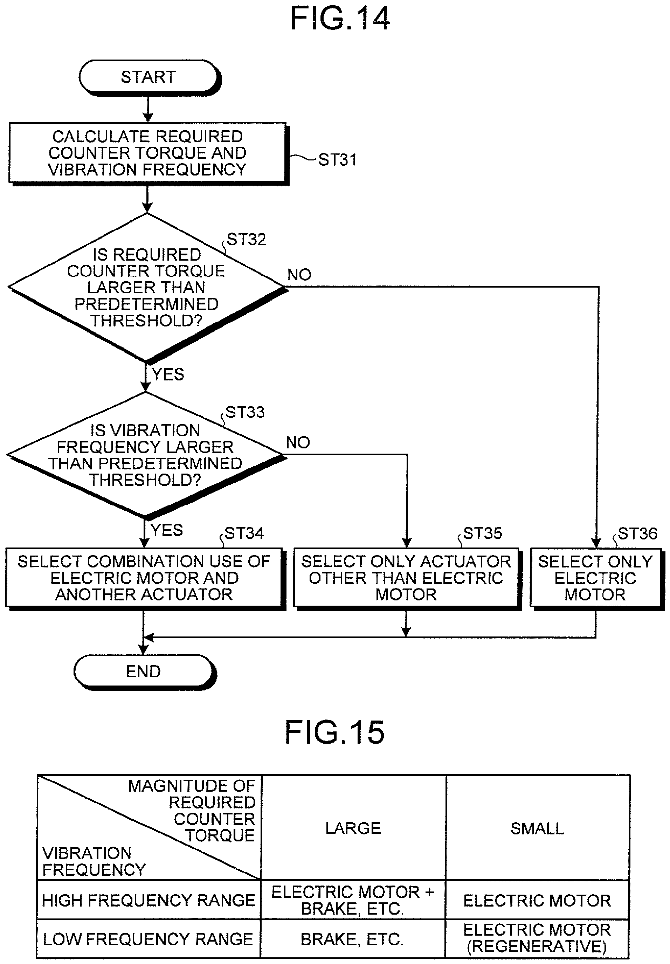

FIG. 14 is a flowchart of an actuator selecting step. FIG. 15 is a table of actuator selection patterns.

In the industrial vehicle 1 with the hybrid system mentioned above (see FIG. 10), the magnitude of the pitching control torque necessary to suppress the pitching vibration (the required counter torque) and the pitching vibration frequency, for example, are preferably considered at Step ST3 of selecting an actuator (see FIG. 3). This enables an appropriate actuator to be selected and thus to effectively suppress the pitching vibration. For example, in the present embodiment, Step ST3 of selecting an actuator is performed in a manner described below (see FIGS. 14 and 15).

At Step ST31, the required counter torque (the pitching control torque necessary to suppress the pitching vibration) and the pitching vibration frequency are calculated. The pitching control unit 62 (the actuator selector 621) calculates the required counter torque and the vibration frequency based on the detection value of the lift pressure sensor 632. After Step ST31, the control proceeds to Step ST32.

At Step ST32, whether the required counter torque is larger than a predetermined threshold is determined. This determination is performed by the actuator selector 621 by comparing the required counter torque calculated at Step ST31 with the predetermined threshold stored in the storage unit 624. When a positive determination is obtained at Step ST32, the control proceeds to Step ST33, and when a negative determination is obtained, the control proceeds to Step ST36.

At Step ST33, whether the vibration frequency is higher than a predetermined threshold is determined. This determination is performed by the actuator selector 621 by comparing the vibration frequency calculated at Step ST31 with the predetermined threshold stored in the storage unit 624. When a positive determination is obtained at Step ST33, the control proceeds to Step ST34, and when a negative determination is obtained, the control proceeds to Step ST35.

At Step ST34, the electric motor 7 and another actuator (the engine 3, the clutch 4, or the brake 5) are selected as actuators. That is, when the required counter torque for the pitching vibration is larger and the vibration frequency is higher (a positive determination at Step ST32 and Step ST33), the plural actuators are used in combination to perform pitching control (see FIGS. 10 and 11). This results in appropriate suppression in large pitching vibration.

At Step ST35, an actuator other than the electric motor 7 (the engine 3, the clutch 4, or the brake 5) is selected. That is, when the required counter torque for the pitching vibration is larger while the vibration frequency is lower (a positive determination at Step ST32 and a negative determination at Step ST33), another mechanical actuator is used instead of the electric motor 7 to perform pitching control. This results in reduction of power consumption by the electric motor 7, so that system energy can be saved.

At Step ST36, the electric motor 7 is selected as an actuator. That is, when the required counter torque for the pitching vibration is smaller (a negative determination at Step ST32), only the electric motor 7 is used to perform pitching control. Therefore, the electric motor 7 with quicker responsiveness performs the pitching control and thus the pitching vibration can be effectively suppressed. In addition, because the required counter torque for the pitching vibration is smaller, the power consumption by the electric motor 7 is smaller.

At Step ST36, when the vibration frequency is lower than the predetermined threshold, a regenerative brake of the electric motor 7 can be used to apply a pitching control torque to the vehicle body 22 (see FIG. 15). That is, in a low frequency range, the pitching control torque using the regenerative brake of the electric motor 7 is sufficient to suppress the pitching vibration. This results in reduction of power consumption by the electric motor 7 and enables a battery to be charged during the regenerative running.

Actuators that can be used for the pitching control depend on the system configuration of the industrial vehicle 1 (see FIG. 16). Therefore, options for the actuators can be appropriately set according to the system configuration of the industrial vehicle 1.

### [Effect]

As described above, the industrial vehicle 1 includes an actuator (for example, the engine 3, the clutch 4, the brake 5, or the electric motor 7) that applies a driving force or a braking force to the vehicle body 22, the vibration detector (the lift pressure sensor 632) that detects pitching vibration of the vehicle body 22, and the pitching control unit 62 that calculates a pitching control torque (a counter torque) for suppressing pitching vibration and generates a pitching control signal for causing the actuator to output the pitching control torque (see FIGS. 1, 6, 8, 10, 12, and 13). When the vehicle runs under a load (a positive determination at Step ST2), the pitching control unit 62 calculates a pitching control torque based on an output value from the vibration detector (Step ST4) and outputs a pitching control signal (Step ST5) (see FIG. 3). Based on the pitching control signal, the actuator is driven (Step ST6). In such a configuration, feedback control is performed based the detection value of the vibration detector to apply the pitching control torque as a driving force or a braking force of the actuator to the vehicle body 22 (see FIGS. 4, 7, 9 and 11). Accordingly, the pitching vibration of the vehicle can be advantageously suppressed.

Furthermore, such a configuration is more preferable in that the existing vehicle configuration can be utilized, compared to a configuration in which an accumulator or a suspension is additionally provided on the vehicle main body to perform pitching control. For example, the industrial vehicle 1 can use the lift pressure sensor 632 as the vibration detector (see FIG. 1). Accordingly, the pitching vibration can be advantageously detected by using the existing lift pressure sensor 632 provided on the vehicle main body 2.

Further, the industrial vehicle 1 uses the brake 5, the clutch 4, or the engine 3 of the vehicle as a pitching control actuator (see FIGS. 1, 6, 8, 10, 12, and 13). In such a configuration, the existing actuator of the engine-driven vehicle can be used to apply a pitching control torque to the vehicle body 22. Accordingly, the pitching control can be advantageously performed with the existing vehicle configuration.

The industrial vehicle 1 having the engine 3 as a power source includes a hybrid industrial vehicle having the engine 3 and the electric motor 7 (see FIGS. 10, 12, and 13). Therefore, the hybrid industrial vehicle 1 can use the brake 5, the clutch 4, or the engine 3 of the vehicle as an actuator to perform pitching control. Such a configuration has an advantage of enabling the pitching control to be performed without using the electric motor 7 when the amount of charge in a battery for driving the electric motor 7 is low, for example.

Furthermore, the industrial vehicle 1, which is a hybrid vehicle, uses the electric motor 7 that constitutes the hybrid system of the vehicle in combination with another actuator (for example, any one of the brake 5, the clutch 4, and the engine 3 of the vehicle) as pitching control actuators (see FIGS. 10, 12, and 13). This is advantageous because the pitching vibration can be appropriately suppressed even if the required counter torque for the pitching vibration is larger and the vibration frequency is higher, for example.

Further, the industrial vehicle 1, which is a hybrid vehicle, uses the electric motor 7 in combination with another actuator (for example, any one of the brake 5, the clutch 4, and the engine 3 of the vehicle) as pitching control actuators or uses any one of the electric motor 7 and the other actuators 3 to 5 as a pitching control actuator, according to the detection value of the vibration detector (the lift pressure sensor 632) (see FIGS. 14 and 15). Such a configuration enables the actuator to be selected according to a state of the pitching vibration, and therefore has an advantage of enabling responsiveness of the pitching control or energy efficiency to improve compared to a configuration in which a prescribed actuator is set.

### Industrial Applicability

As described above, the industrial vehicle according to the present invention is useful in being capable of suppressing pitching vibration of a vehicle.

### Reference Signs List

- 1: industrial vehicle

- 2: vehicle main body
- 21F: front wheel (driving wheel)
- 21R: rear wheel (driven wheel)
- 22: vehicle body
- 23: cargo-handling device
- 231: lift mechanism
- 3: engine
- 4: clutch
- 5: brake
- 61: vehicle ECU
- 62: pitching control unit
- 621: actuator selector
- 622: pitching-control-torque calculation unit
- 623: pitching-control-signal generation unit
- 624: storage unit
- 631: vehicle speed sensor
- 632: lift pressure sensor
- 7: electric motor

## Claims

1. An industrial vehicle (1) including an engine (3) as a power source and a cargo-handling device (23) that is configured to carry a cargo, the industrial vehicle (1) comprising:
an actuator that is configured to apply a driving force or a braking force to a vehicle body (22);
a vibration detector (632) that is configured to detect pitching vibration of a vehicle body (22) by measuring a lift pressure of a lift mechanism (231) that is configured to carry the cargo and to lift and lower the cargo; and
a pitching control unit (62) that is configured to calculate a pitching control torque for suppressing pitching vibration and generate a pitching control signal for causing the actuator to output the pitching control torque, wherein
when the industrial vehicle (1) runs under a load, the pitching control unit (62) is configured to calculate the pitching control torque based on the lift pressure as a detection value of the vibration detector (632) to output the pitching control signal, and the actuator is configured to be driven based on the pitching control signal.

2. The industrial vehicle (1) according to claim 1, wherein a brake (5), a clutch (4), or the engine (3) of the vehicle (1) is used as the actuator.

3. The industrial vehicle (1) according to claim 1, wherein an electric motor (7) that constitutes a hybrid system of the vehicle (1) and another actuator are used in combination as the actuator.

4. The industrial vehicle (1) according to claim 3, wherein the electric motor (7) and the another actuator are used in combination as the actuator or any one of the electric motor (7) and the another actuator is used as the actuator, according to a detection value of the vibration detector (632).

## Patentansprüche

1. Gewerbliches Fahrzeug (1) mit einer Maschine (3) als Leistungsquelle und einer Ladungshandhabungsvorrichtung (23), die ausgestaltet ist, um eine Last zu tragen, wobei das Gewerbefahrzeug (1) enthält:
einen Aktuator, der ausgestaltet ist, um eine Antriebskraft oder einer Bremskraft auf den Fahrzeugköper (22) anzuwenden;
einen Vibrationsdetektor (632), der ausgestaltet ist, um eine Nickvibration des Fahrzeugkörpers (22) durch Messen eines Hebedrucks eines Hebemechanismus (231) zu erfassen, wobei der Hebemechanismus (231) ausgestaltet ist, um die Last zu tragen, und um die Last zu heben und abzusenken; und
eine Nicksteuereinheit (62), die ausgestaltet ist, um ein Nicksteuerdrehmoment zum Unterdrücken der Nickvibration zu berechnen und ein Nicksteuersignal zu erzeugen, um den Aktuator zu veranlassen, das Nicksteuerdrehmoment auszugeben, wobei
wenn das Gewerbefahrzeug (1) unter Last läuft, die Nicksteuereinheit (62) ausgestaltet ist, um das Nicksteuerdrehmoment beruhend auf dem Hebedruck als einen Detektionswert des Vibrationsdetektors (632) zu berechnen, um das Nicksteuersignal auszugeben, und der Aktuator ausgestaltet ist, um beruhend auf dem Nicksteuersignal angetrieben zu werden.

2. Gewerbefahrzeug (1) nach Anspruch 1, bei dem eine Bremse (5), eine Kupplung (4) oder eine Maschine (3) des Fahrzeugs (1) als Aktuator verwendet wird.

3. Gewerbefahrzeug (1) nach Anspruch 1, bei dem ein elektrischer Motor (7), der ein Hybridsystem des Fahrzeugs (1) bildet, und ein weiteres Aktuatorelement in Kombination als der Aktuator verwendet werden.

4. Gewerbefahrzeug (1) nach Anspruch 3, bei dem der elektrische Motor (7) und das weitere Aktuatorelement in Kombination als der Aktuator verwendet werden, oder wobei entweder der elektrische Motor (7) oder das andere Aktuatorelement als der Aktuator verwendet werden, entsprechend dem Detektionswert des Vibrationsdetektors (632).

## Revendications

1. Véhicule industriel (1) incluant un moteur (3) en tant que source d'alimentation et un dispositif de manipulation de chargement (23) qui est configuré pour porter un chargement, le véhicule industriel (1) comprenant :
un actionneur qui est configuré pour appliquer une force d'entraînement ou une force de freinage à un corps de véhicule (22) ;
un détecteur de vibration (632) qui est configuré pour détecter une vibration de tangage d'un corps de véhicule (22) par mesure d'une pression de levée d'un mécanisme de levée (231) qui est configuré pour porter le chargement et pour lever et abaisser le chargement ; et
une unité de commande de tangage (62) qui est configurée pour calculer un couple de commande de tangage pour la suppression de la vibration de tangage et générer un signal de commande de tangage pour amener l'actionneur à émettre le couple de commande de tangage, dans lequel
lorsque le véhicule industriel (1) roule avec une charge, l'unité de commande de tangage (62) est configurée pour calculer le couple de commande de tangage sur la base de la pression de levée en tant que valeur de détection du détecteur de vibration (632) pour émettre le signal de commande de tangage, et l'actionneur est configuré pour être entraîné sur la base du signal de commande de tangage.

2. Véhicule industriel (1) selon la revendication 1, dans lequel un frein (5), un embrayage (4) ou le moteur (3) du véhicule (1) est utilisé en tant qu'actionneur.

3. Véhicule industriel (1) selon la revendication 1, dans lequel un moteur électrique (7) qui constitue un système hybride du véhicule (1) et un autre actionneur sont utilisés en combinaison en tant qu'actionneur.

4. Véhicule industriel (1) selon la revendication 3, dans lequel le moteur électrique (7) et l'autre actionneur sont utilisés en combinaison en tant qu'actionneur ou l'un quelconque du moteur électrique (7) et de l'autre actionneur est utilisé en tant qu'actionneur, selon une valeur de détection du détecteur de vibration (632).
